# EUROPÄISCHE PATENTSCHRIFT

(11) **EP 1 281 009 B1**
(45) Veröffentlichungstag und Bekanntmachung des Hinweises auf die Patenterteilung: **21.07.2004**
(21) Anmeldenummer: 01933790.6
(22) Anmeldetag: 04.04.2001
(51) Int. Cl.: F16D 65/16

(54) **DRUCKLUFTBETÄTIGTE SCHEIBENBREMSE MIT DRUCKELEMENTEN**
COMPRESSED AIR OPERATED DISK BRAKE WITH PRESSURE ELEMENTS
FREIN A DISQUE ACTIONNE PAR AIR COMPRIME COMPORTANT DES ELEMENTS DE PRESSION

(30) Priorität: 03.05.2000 DE 10021571
(43) Veröffentlichungstag der Anmeldung: 05.02.2003
(73) Patentinhaber: KNORR-BREMSE Systeme für Nutzfahrzeuge GmbH, 80809 München (DE)
(72) Erfinder: BAUMGARTNER, Hans, 85368 Moosburg (DE); BIEKER, Dieter, 83080 Oberaudorf (DE)
(86) Internationale Anmeldenummer: PCT/EP2001/003814
(87) Internationale Veröffentlichungsnummer: WO 2001/084008

(56) Entgegenhaltungen:
- EP-A- 0 949 433
- WO-A-98/26968
- DE-A- 2 922 472
- US-A- 4 109 765
- US-A- 5 515 949
- US-A- 5 558 185
- US-A- 5 833 035

## Beschreibung

Die Erfindung betrifft eine Scheibenbremse, vorzugsweise eine druckluftbetätigte Scheibenbremse mit einem eine Bremsscheibe umfassenden Bremssattel, mit einer einen schwenkbar gelagerten Drehhebel aufweisenden, auf einer Seite der Bremsscheibe angeordneten Zuspanneinrichtung, wobei der Drehhebel an einer ein Druckelement aufweisenden Exzenteranordnung anliegt und direkt oder indirekt auf eine relativ zur Bremsscheibe verschiebbare Traverse einwirkt.

So eine Scheibenbremse geht z.B. aus WO-A-98 26968 hervor.

Die Übertragung der Kräfte erfolgt bei den gattungsgemäßen Scheibenbremsen bei Betätigung des Bremszylinders über eine Stange, die auf den Drehhebel wirkt. Der Drehhebel ist mittels eines Drehlagers im Gehäuse des Bremssattels gelagert. In einem Versatz zur Drehachse des Drehhebels ist eine zylindrische Drehlagerwelle einer Exzenter-Anordnung in einer Ausnehmung des Drehhebels angeordnet. Beim Verschwenken des Drehhebels wird dadurch eine federbelastete Traverse quer zur Ebene der Bremsscheibe verschoben. Diese Traverse greift an der zur Bremsscheibe gewandten Seite an wenigstens einer Drehspindel mit einem Druckstück an, welches beim Betätigen der Bremse gegen die Bremsbacke drückt, so daß der Bremsbelag die Bremsscheibe kontaktiert. Die gattungsgemäße Scheibenbremse ist als einspindlige Ausführung oder als zweispindlige Ausführung realisierbar.

Bei den bekannten Scheibenbremsen werden die bewegten Bauteile, insbesondere die Lagerung der Exzenter-Anordnung und des Drehhebels gegenüber dem Gehäuse zum Teil als wartungsfreie Gleitlagerschalen oder als Wälzlager ausgeführt. Der Drehhebel ist in dem der Bremsscheibe abgewandten Bereich des Gehäuses in halbzylindrischen Wälzlagerschalen gelagert. Das Exzenterlager ist exzentrisch zur Lagerung des Drehhebels in einer halbzylindrischen Ausnehmung des Drehhebels gelagert. In diese Ausnehmung ist ein Gleitlager in Form einer Halbzylinderschale eingesetzt. Die Übertragung der Kraft erfolgt durch die zylindrische Welle.

Beim Betätigen der Scheibenbremse entstehen Querkräfte, die durch Schräglauf der Lager aufgrund von Toleranzen und aufgrund von betriebsbedingten Deformationen sowie durch die im Fahrbetrieb auftretende Rüttelbeanspruchung und den daraus resultierenden Massenkräften hervorgerufen werden. Es sind deshalb zur Abtragung der Querkräfte entsprechende Sicherungselemente für den Drehhebel und für die in den Lagerschalen angeordneten zylindrischen Druckelemente notwendig. Es sind außerdem durch eine mechanische Bearbeitung hergestellte Führungsflächen notwendig. Durch die Führungsflächen und die Sicherungselemente werden nicht nur die Herstellkosten erhöht, sondern zwangsläufig wird auch die Montage der Scheibenbremse aufwendiger. Darüber hinaus wird die Störanfälligkeit erhöht.

Der Erfindung liegt daher das Problem zugrunde, eine druckluftbetätigte Scheibenbremse mit den Merkmalen des Oberbegriffes des Anspruches 1 in konstruktiv einfacher Weise so zu gestalten, daß die beim Betätigen der Bremse auftretenden Querkräfte ohne Sicherüngselemente und ohne Führungsflächen abgetragen werden können. Dabei soll die Scheibenbremse weiterhin hoch belastbar und in einer kompakten Bauform ausführbar sein.

Dieses Problem wird durch den Gegenstand des Anspruches 1 gelöst. Dabei ist das wenigstens eine Druckelement der Exzenteranordnung im wesentlichen kugel- oder oval- und/oder tonnen- oder ballenkugelförmig ausgestaltet und bildet derart ein Kugeldruckelement aus.

Die beim Bremsvorgang auftretenden Querkräfte werden nunmehr nicht mehr über zusätzliche Sicherungselemente und die deshalb notwendigen Führungsflächen abgetragen, sondern über die Kugeldruckelemente selbst. Die Ausführung ist deshalb durch die Reduzierung der Bauteile besonders kostengünstig herstellbar sowie darüber hinaus auch montagefreundlich. Da die Anzahl der Bauteile gegenüber den bekannten Ausführungen verringert wird, wird die Störanfälligkeit herabgesetzt.

Die Kugeldruckelemente sind in im wesentlichen kalottenförmig ausgebildeten Gleitlagerschalen gelagert, welche in konstruktiv einfacher Weise im Zusammenspiel mit den Kugeldruckelementen die auftretenden Querkräfte aufnehmen. Dabei sind die Kugeldruckelemente bzw. deren Gleitlagerschalen in im wesentlichen kalottenförmige Ausnehmungen der Brücke bzw. Traverse oder des Drehhebels oder des Bremssattels oder des Drehhebels einsetzbar.

Es sind verschiedene Ausführungsformen der Erfindung realisierbar. So wirkt nach einem ersten Ausführungsbeispiel die Brücke auf eine in ihr im wesentlichen mittig angeordnete, einzelne Drehspindel mit Druckstück ein, wobei sich die Traverse quer zur Drehspindel erstreckt und beidseits der Drehspindel jeweils über eines der Kugeldruckelemente am Drehhebel gelagert ist.

Alternativ ist es denkbar, daß die Traverse auf eine in ihr im wesentlichen mittig angeordnetes einzelnes Drehspindel einwirkt, wobei sich die Brücke beidseits des Druckstückes erstreckt und am Drehhebel angreift, welcher über die Kugeldruckelemente am Bremssattel gelagert ist.

Neben den einspindligen Ausführungen sind auch entsprechende zweispindlige Ausführungsformen realisierbar. So ist es vorteilhaft, wenn die Traverse auf zwei zueinander parallel angeordnete Druckstücke und/oder Drehspindeln einwirkt, wobei die Traverse über wenigstens zwei der Kugeldruckelemente am Drehhebel gelagert ist. Alternativ wirkt die Traverse auf zwei zueinander parallel angeordnete Druckstücke und/oder Drehspindeln ein, wobei die Traverse über ein Drehlager am Drehhebel ansetzt, der über wenigstens eines der Kugeldruckelemente am Bremssattel gelagert ist.

Eine Fixierung der Gleitlager ist es auf einfache Weise dadurch erzielbar, daß an die kalottenförmigen Gleitlagerschalen an der den Ausnehmungen zugewandten Seiten jeweils wenigstens zur Verdrehsicherung ein Zapfen oder eine Ausprägung angesetzt oder angeformt ist, der/die in ein entsprechend gestaltetes Sackloch der Brücke/Traverse oder des bremsscheibenabgewandten Teiles des Bremssattels oder des Drehhebels eingreift.

Die Ausprägung kann wiederum zur Aufnahme eines Schmiermittels als Hohlzapfen oder hohle Ausprägung ausgebildet sein, welche zur Lagerfläche der Kugelschale hin offen steht.

Da die Anzahl der Bauteile gegenüber den bekannten Ausführungen verringert wird, wird durch die Erfindung auch die Störanfälligkeit herabgesetzt. Im Normalfall ist es nicht notwendig, daß alle Gleitlagerschalen als Kugelschalen ausgebildet sind, da es ausreichend ist, wenn wenigstens ein Gleitlagerschalen in dieser Form gestaltet ist. Es ist in weiterer Ausgestaltung vorgesehen, daß wenigstens eines der Kugeldruckelemente formschlüssig in die zugehörige Kugelschale eingesetzt ist, und die weiteren Wälzkörper beweglich in die kalottenförmigen Gleitlagerschalen eingesetzt sind. Dadurch ist die axiale Sicherung gewährleistet. jedoch können Toleranzen und betriebsbedingte Deformationen in den jeweils korrespondierenden Bauteilen aufgenommen werden, da eine vorgegebene und begrenzte Beweglichkeit der in die Kalottenförmige Gleitlagerschale eingesetzten Bauteile gegeben ist. Zweckmäßigerweise sind die kalottenförmige Gleitlagerschalen zur beweglichen Aufnahme der Exzenter-Anordnung und/oder der Wälzkörper oval ausgestaltet. Allerdings ist das Spiel relativ gering.

Die Kugeldruckelemente sind kostengünstig als Wälzlagerkugeln ausbildbar, die von einschlägigen Herstellern handelsüblich bezogen werden können. Sie haben i.allg. eine äußerst hohe Oberflächengüte, da die Rauhtiefe maximal zwei tausendstel Millimeter beträgt. Die kalottenförmigen Gleitlagerschalen sind vorzugsweise aus einem geeigneten, hoch belastbaren Gleitlagerschalenwerkstoff hergestellt (z.B. Verbundlager mit Polymergleitschicht). Alternativ können die kalottenförmigen Gleitlagerschalen auch aus Graphit bestehen.

Alternativ kann ein geeignetes Gleitlagermaterial direkt auf die Oberfläche der kalottenförmigen Schale zur Aufnahme der Kugel augebracht werden, z.B. in Form eines Gleitbleches etc.

An Hand der beiliegenden Zeichnung wird die Erfindung anhand von Ausführungsbeispielen näher erläutert. Es zeigen:
- Figur 1: eine erfindungsgemäße druckluftbetätigte Scheibenbremse in einem ersten Schnitt;
- Figur 2: die erfindungsgemäße druckluftbetätigte Scheibenbremse der Fig. 1 in einem gegenüber Fig. 1 um 90° gedrehten Schnitt;
- Figur 3: eine weitere erfindungsgemäße druckluftbetätigte Scheibenbremse in einem ersten Schnitt; und

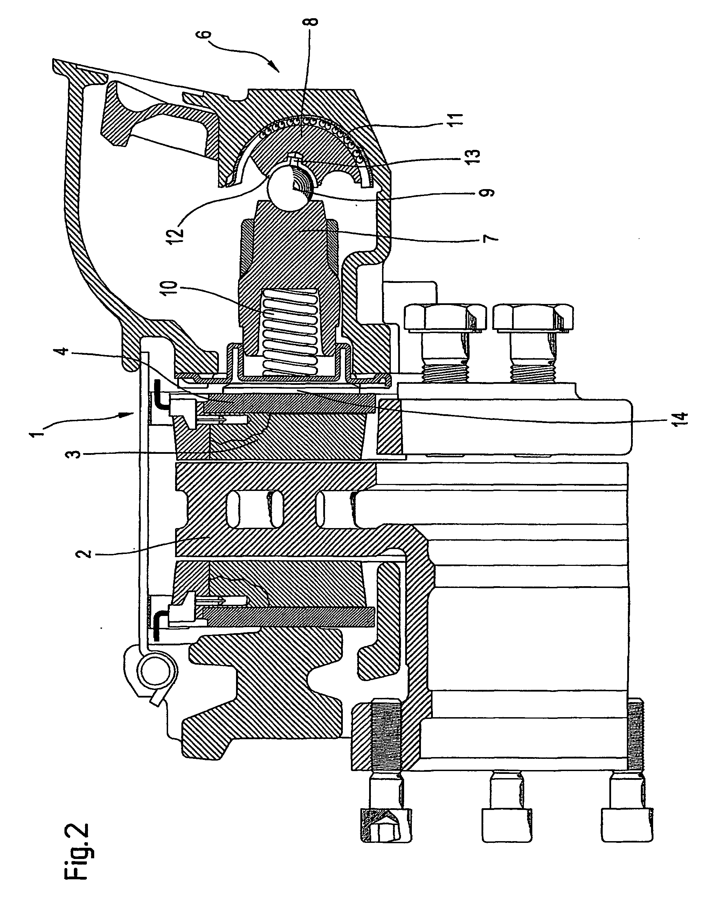

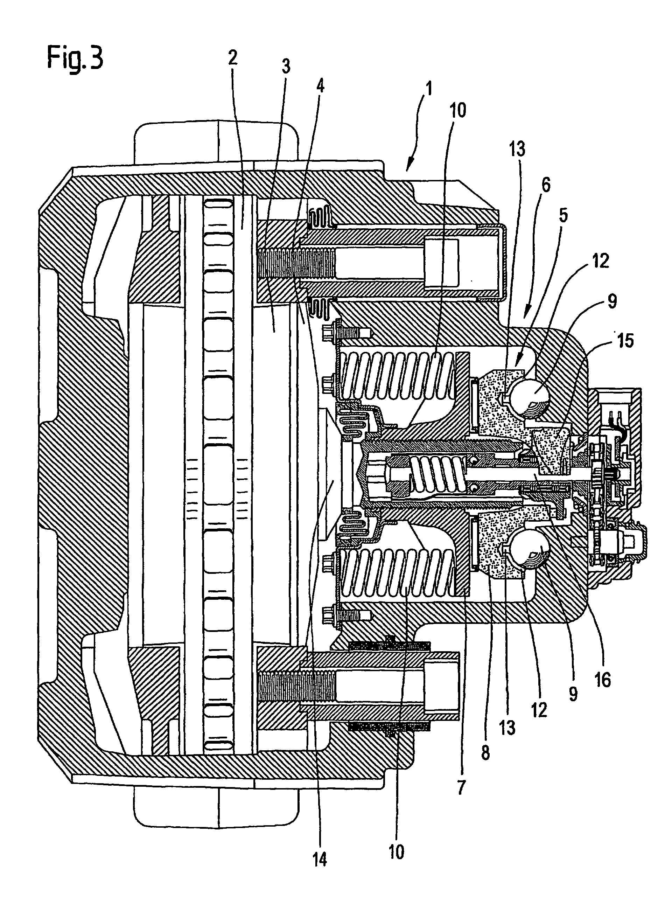

- Figur 2: die erfindungsgemäße druckluftbetätigte Scheibenbremse der Fig. 3 in einem gegenüber Fig. 3 um 90° gedrehten Schnitt.

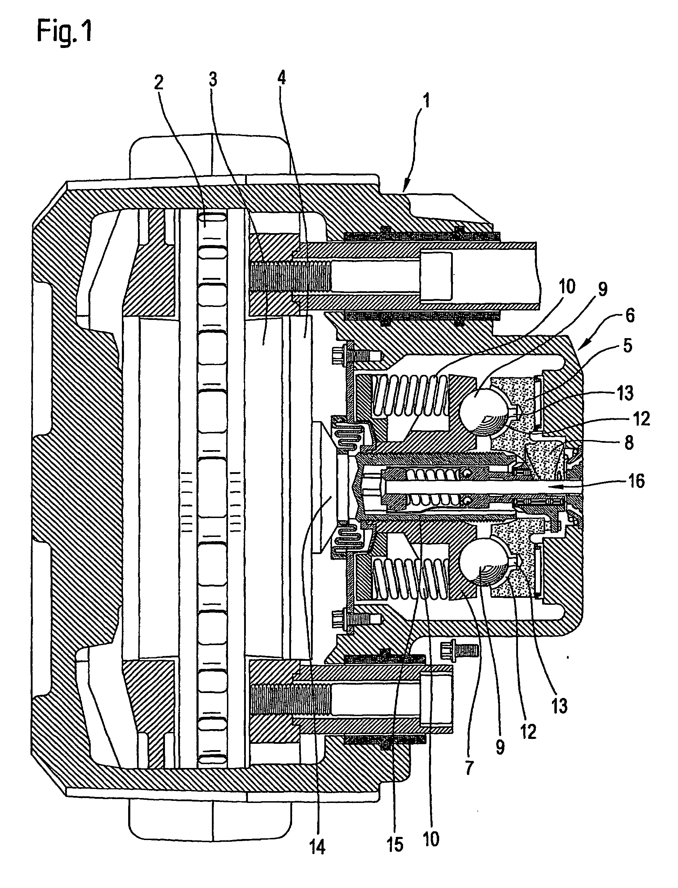

Die in Figur 1 dargestellte druckluftbetätigte Scheibenbremse 1 mit einer Bremsscheibe 2 ausgestattet, die beim Betätigen der Scheibenbremse vom Bremsbelag 3 kontaktiert wird, der auf einer Bremsbacke 4 befestigt ist. Die Betätigung der Bremsbacke 4 erfolgt über eine Zuspanneinrichtung 5, die in einem nach Art eines Gehäuses gestalteten Bremssattel 6 angeordnet ist und die im wesentlichen aus einer quer zur Bremsbacke 4 verschiebbaren Traverse (bzw. hier besser: Brücke) 7, einem schwenkbar gelagerten Drehhebel 8 sowie einer Exzenter-Anordnung (u.a. Element 9) besteht, die exzentrisch zur Drehachse des unteren Exzenterabschnittes des Drehhebels 8 angeordnet ist.

In hier nicht dargestellter Weise greift an das der Drehachse des Drehhebels 8 gegenüberliegende Ende des Drehhebels 8 eine Druckstange an, so daß der Drehhebel 8 beim Betätigen der Scheibenbremse 1 gemäß der Darstellung nach der Figur 2 entgegen dem Uhrzeigersinn verschwenkt wird. Die Brücke 7 wird dadurch entgegen der Wirkung von Druckfedern 10 in Richtung zur Bremsbacke 3 verschoben, so daß ein Zuspannen der Scheibenbremse 1 erreicht wird. Die Druckfedern 10 lösen die Bremse, sobald der Bremsvorgang beendet ist. Der Drehhebel 8 stützt sich bei der Ausführung gemäß der Figur 1 mittels eines Wälz-Drehlagers 11 am Bremssattel ab. Bei dieser Ausführung liegt das Wälz-Drehlager 11 an der von der Bremsbacke 4 abgewandten Seite des Drehhebels 8.

Der Drehhebel 8 ist im wesentlichen T-förmig gestaltet, wobei der der Exzenter-Anordnung zugewandte Abschnitt des Drehhebels 8 zwei im wesentlichen halbkugelkalottenartige Ausnehmungen aufweist, in die zur Kraftübertragung zwei zur Exzenter-Anordnung gehörige Wälzlagerkugeln 9 eingesetzt sind. In der Brücke 7 sind gemäß der Darstellung der Figur 1 lagegerecht ebenfalls zwei kalottenartige Ausnehmungen vorgesehen, in welche jeweils kalottenförmige Gleitlagerschalen 12 eingesetzt sind. Die kalottenförmigen Gleitlagerschalen 12 umschließen knapp die Hälfte der Oberfläche je einer der als Wälzlagerkugeln ausgebildeten Kugeldruckelementen 9 der Exzenteranordnung. Die kalottenförmigen Gleitlagerschalen 12 sind aus einem verschleißfestem Gleitlagerschalenmaterial gefertigt.

Bei der Ausführung nach der Figur 1 und 2 ist an die von der Wälzlagerkugel 9 abgewandte Seite der Kugelschale 12 eine hohlzylindrische Ausprägung 13 angcformt, die an ihrem freien Ende im wesentlichen kegelförmig ausgebildet ist. In die Ausprägung 13 kann zur Dauerschmierung der Kugelschale 12 ein Schmiermittel, beispielsweise ein Schmierfett eingefüllt werden.

Die Ausführung nach der Figur 1 und 2 ist als einspindlige Ausführungsform ausgebildet, da sie nur mit einer Stellspindel 15 und einem Druckstück 14 ausgestattet ist. Die in der Figur 3 dargestellte Scheibenbremse 1 ist für Nutzfahrzeuge im unteren Lastbereich ausgestattet. Die Abmessungen sind dementsprechend klein. Im Gegensatz zu der dargestellten Ausführung könnte die Scheibenbremse auch als Zweispindelbremse ausgebildet sein. An der Bremsbacke 4 greifen dann zwei Druckstücke 14 an.

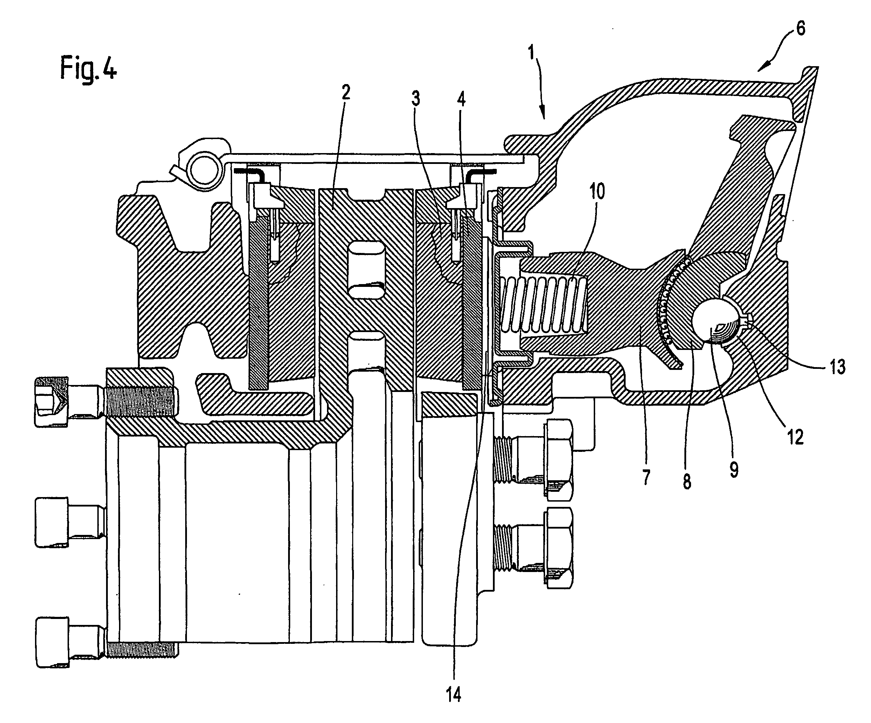

Bei der Ausführung nach der Figur 3 und 4 ist zwischen dem Drehhebel 8 und der Brücke 7 das Drehlager 11 ausgebildet. Entgegen der Darstellung nach der Figur 1 und 2 sind dann die Wälzlagerkugeln 9 der Exzenteranordnung an der von der Bremsscheibe 2 abgewandten Seite in Ausnehmungen des Drehhebels 8 angeordnet. Die kalottenförmigen Gleitlagerschalen 12 sind wiederum in diese Ausnehmungen des Drehhebels 8 eingesetzt. Die Wälzlagerkugeln 9 stützen sich dann an entsprechend ausgebildeten kugelkalottenartigen Ausnehmungen des Bremssattels 6 ab, die an der Innenseite des Bremssattels ausgeformt sind. Entgegen der Darstellung könnten die kalottenförmigen Gleitlagerschale 12 auch in Ausnehmungen des Bremssattels 6 eingesetzt sein.

Die Erfindung ist nicht auf die dargestellten Ausführungsbeispiele beschränkt. Wesentlich ist. daß zumindest eine Kugelschale 12 die darin angeordnete Wälzlagerkugel 9 schließend umgreift, um die Querkräfte beim Bremsvorgang abzutragen. Die restlichen kalottenförmigen Gleitlagerschale 12 könnten so gestaltet sein, daß sich die Wälzlagerkugeln 9 darin ein klein wenig verschieben können.

### Bezugszeichenliste

- 1: Scheibenbremse
- 2: Bremsscheibe
- 3: Bremsbelag
- 4: Bremsbacke
- 5: Zuspanneinrichtung
- 6: Bremssattel
- 7: Traverse
- 8: Drehhebel
- 9: Kugeldruckelement
- 10: Druckfeder
- 11: Drehlager
- 12: Gleitlagerschale-Kugelschale
- 13: Zapfen
- 14: Druckstück
- 15: Drehspindel
- 16: Bolzen
- 17: Brücke

## Patentansprüche

1. Scheibenbremse, vorzugsweise druckluftbetätigte Scheibenbremse (1) mit
- einem eine Bremsscheibe (2) umfassenden Bremssattel (6),
- mit einer einen schwenkbar gelagerten Drehhebel (8) aufweisenden, auf einer Seite der Bremsscheibe (2) angeordneten Zuspanneinrichtung (5),
- wobei der Drehhebel (8) an einer ein Druckelement (9) aufweisenden Exzenteranordnung anliegt und direkt oder indirekt auf eine relativ zur Bremsscheibe (2) verschiebbare Traverse (7) einwirkt,
**dadurch gekennzeichnet, daß**
- das wenigstens eine Druckelement der Exzenteranordnung im wesentlichen kugel- oder oval- und/oder tonnen- oder ballenkugelförmig ausgestaltet ist und derart ein Kugeldruckelement (9) ausbildet,
- wobei die Kugeldruckelemente (9) in im wesentlichen kalottenförmig ausgebildeten Gleitlagerschalen (12) gelagert sind.

2. Scheibenbremse nach Anspruch, 1 **dadurch gekennzeichnet, daß** die Gleitlagerschalen (12) in im wesentlichen kalottenförmige Ausnehmungen
a) der Brücke/Traverse (7) oder des Drehhebels (8)
b) oder bremscheibenabgewandten Teiles Bremssattels (6) oder des Drehhebels (8) eingesetzt sind.

3. Scheibenbremse nach einem der Ansprüche 1 oder 2, **dadurch gekennzeichnet, daß** die Traverse (7) auf eine in ihr im wesentlichen mittig angeordnete, einzelne Drehspindel (15) mit Druckstück einwirkt, wobei sich die Traverse (7) quer zur Drehspindel erstreckt und beidseits der Drehspindel jeweils über eines der Kugeldruckelemente (9) am Drehhebel (8) gelagert ist.

4. Scheibenbremse nach einem der Ansprüche 1 bis 3, **dadurch gekennzeichnet, daß** die Traverse (7) auf eine in ihr im wesentlichen mittig angeordnetes einzelnes Druckstücks und/oder einer Drehspindel (15) einwirkt, wobei sich die Traverse (7) beidseits der Drehspindel (15) erstreckt und am Drehhebel (8) angreift, der über die Kugeldruckelemente (9) am Bremssattel (8) gelagert ist.

5. Scheibenbremse nach einem der vorherigen Ansprüche, **dadurch gekennzeichnet, daß** die Traverse (7) auf zwei zueinander parallel angeordnete Druckstücke und/oder Drehspindeln einwirkt und über wenigstens zwei der Kugeldruckelemente (9) am Drehhebel (8) gelagert ist.

6. Scheibenbremse nach einem der vorherigen Ansprüche, **dadurch gekennzeichnet, daß** die Traverse (7) auf zwei zueinander parallel angeordnete Druckstücke und/oder Drehspindeln einwirkt, wobei die Traverse über ein Drehlager (11) am Drehhebel (8) ansetzt, der wiederum über wenigstens eines der Kugeldruckelemente (9) am Bremssattel (8) gelagert ist.

7. Scheibenbremse nach einem der vorstehenden Ansprüche, **dadurch gekennzeichnet, daß** wenigstens eine der Kugelschalen (12) eines der Kugeldruckelemente (9) im wesentlichen spielfrei formschlüssig umgreift, und daß die weiteren in die kalottenförmigen Gleitlagerschalen (12) eingesetzten Kugeldruckelemente (9) oder die Gleitlagerschalen (12) derart ausgebildet sind, daß die Kugeldruckelemente (9) in den kalottenförmigen Kugelschalen (12) begrenzt beweglich sind.

8. Scheibenbremse nach einem der vorstehenden Ansprüche, **dadurch gekennzeichnet, daß** die kalottenförmigen Gleitlagerschalen (12) zur beweglichen Aufnahme der Kugeldruckelemente (9) eine ovale Form aufweisen.

9. Scheibenbremse nach einem der vorstehenden Ansprüche, **dadurch gekennzeichnet, daß** die in die kalottenförmigen Gleitlagerschalen (12) eingesetzten Kugeldruckelemente als Wälzlagerkugeln (9) ausgebildet sind.

10. Scheibenbremse nach einem der vorstehenden Ansprüche, **dadurch gekennzeichnet, daß** die Oberflächen der Wälzlagerkugeln (9) eine Rauhtiefe von weniger als zwei tausendstel Millimeter aufweisen.

11. Scheibenbremse nach einem der vorstehenden Ansprüche, **dadurch gekennzeichnet, daß** an die kalottenförmigen Gleitlagerschalen (12) an der den Ausnehmungen zugewandten Seiten jeweils wenigstens zur Verdrehsicherung ein Zapfen oder eine Ausprägung (13) angesetzt oder angeformt ist, der in ein entsprechend gestaltetes Sackloch der Traverse (7) oder des Bremssattels (6) oder des Drehhebels (8) eingreift.

12. Scheibenbremse nach einem der vorstehenden Ansprüche, **dadurch gekennzeichnet, daß** der Zapfen (13) zur Aufnahme eines Schmiermittels als Hohlzapfen ausgebildet ist, der zur Lagerfläche der Kugelschale (12) hin offen ist.

## Claims

1. Disc brake, preferably disc brake (1) operated by compressed air, comprising
- brake calliper (6) enclosing a brake disc (2),
- an applicator means (5) comprising a rotary lever (8) supported for pivoting motion and disposed on one side of said brake disc (2),
- wherein said rotary lever (8) bears against an eccentric assembly including a pressure element (9) and acting directly or indirectly upon a cross arm (7) displaceable relative to said brake disc (2),
**characterised in that**
- said at least one pressure element of said eccentric assembly presents a substantially ball-shaped or oval and/or drum-shaped or cambered and ball-shaped configuration, thus forming a spherical pressure element (9),
- with said spherical pressure elements (9) being supported in plain-bearing shells (12) presenting substantially the shape of spherical segments.

2. Disc brake according to Claim 1, **characterised in that** said plain-bearing shells (12) are inserted into recesses having substantially the shape of spherical segments
(a) of said bridge/cross arm (7) or said rotary lever (8)
(b) or of that part of said brake calliper (6) turned away from said brake disc or of said rotary lever (8).

3. Disc brake according to any of the Claims 1 or 2, **characterised in that** said cross arm (7) acts upon a rotary spindle (15) with a pressure element, which is disposed therein substantially in a central position, with said cross arm (7) extending transversely relative to said rotary spindle and being supported on said rotary lever (8) on either side of said rotary spindle via a respective one of said spherical pressure elements (9).

4. Disc brake according to any of the Claims 1 to 3, **characterised in that** said cross arm (7) acts upon an individual pressure element disposed therein in a substantially central position and/or upon a rotary spindle (15), with said cross arm (7) extending on either side of said rotary spindle (15) and engaging on said rotary lever (8) that is supported on said brake calliper (8) via said spherical pressure elements (9).

5. Disc brake according to any of the preceding Claims, **characterised in that** said cross arm (7) acts upon two pressure elements and/or rotary spindles disposed in parallel to each other and supported via at least two of said spherical pressure elements (9) on said rotary elements (8).

6. Disc brake according to any of the preceding Claims, **characterised in that** said cross arm (7) acts upon two pressure elements and/or rotary spindles disposed in parallel to each other, with said cross arm engaging via a ball-and-socket bearing (11) on said rotary lever (8) that is supported, in its turn, via at least one of said spherical pressure elements (9) on said brake calliper (8).

7. Disc brake according to any of the preceding Claims, **characterised in that** at least one of said spherical shells (12) encloses one of said spherical pressure elements (9) in a substantially positive manner without clearance, and that the further spherical pressure elements (9) inserted into said plain-bearing shells (12) in the form of spherical segments or said plain-bearing shells (12) are so configured that said spherical pressure elements (9) are mobile to a restricted extent in said spherical shells (12) in the form of spherical segments.

8. Disc brake according to any of the preceding Claims, **characterised in that** said plain-bearing shells (12) in the form of spherical segments present an oval shape for mobile accommodation of said spherical pressure elements (9).

9. Disc brake according to any of the preceding Claims, **characterised in that** said spherical pressure elements inserted into said plain-bearing shells (12) in the form of spherical segments are configured as rolling-contact bearing spheres (9).

10. Disc brake according to any of the preceding Claims, **characterised in that** the surfaces of said rolling-contact bearing spheres (9) present a depth of roughness of less than two thousandths of a millimetre.

11. Disc brake according to any of the preceding Claims, **characterised in that** a respective pin or a relief (13) is attached or integrally shaped on said plain-bearing shells (12) in the form of spherical segments on the sides facing said recesses at least for preventing rotation, which pin or relief engages in a blind hole of corresponding shape of said cross arm (7) or said brake calliper (6) or said rotary lever (8).

12. Disc brake according to any of the preceding Claims, **characterised in that** said pin (13) is designed as hollow pin for receiving a lubricant, which is open towards the bearing surface of said spherical shell (12).

## Revendications

1. Frein à disque, de préférence frein à disque (1) commandé par de l'air comprimé, comprenant
- un étrier de frein (6) renfermant un disque à frein (2),
- un moyen applicateur (5) comprenant un levier tournant (8) logé pour un mouvement pivotant et disposé d'un côté dudit disque à frein (2),
- dans lequel ledit levier tournant (8) porte contre un groupe excentrique comprenant un élément presseur (9) et agissant directement ou indirectement sur une traverse (7) déplaçable relativement audit disque à frein (2),
**caractérisé en ce**
- **que** ledit au moins un élément presseur dudit groupe excentrique présente une configuration essentiellement sphérique ou ovale et/ou en barillet ou bombé et sphérique, en formant ainsi un élément presseur (9) sphérique,
- lesdits éléments presseurs (9) sphériques s'appuyant dans des coquilles de coussinet lisse (12), qui ont essentiellement la forme de segments sphériques.

2. Frein à disque selon la revendication 1, **caractérisé en ce que** lesdites coquilles de coussinet lisse (12) sont insérés dans des creux essentiellement sous forme de segments sphériques
(a) dudit pont/de ladite traverse (7) ou dudit levier tournant (8)
(b) ou de cette partie dudit étrier de frein (6), qui est tourné dudit disque à frein ou dudit levier tournant (8).

3. Frein à disque selon une quelconque des revendications 1 ou 2, **caractérisé en ce que** ladite traverse (7) agit sur une broche rotative (15) à un élément presseur, qui est disposé à son intérieur essentiellement en une position centrale, à ladite traverse (7) s'étendant en travers relativement à ladite broche rotative et étant appuyé sur ledit levier tournant (8) des deux côtés de ladite broche rotative via un élément respectif parmi lesdits éléments presseurs (9) sphériques.

4. Frein à disque selon une quelconque des revendications 1 à 3, **caractérisé en ce que** ladite traverse (7) agit sur un élément presseur individuel disposé à son intérieur en une position essentiellement centrale et/ou sur une broche rotative (15), ladite traverse (7) s'étendant des deux côtés de ladite broche rotative (15) et étant en prise audit levier tournant (8), qui s'appuie audit étrier de frein (8) via lesdits éléments presseurs sphériques (9).

5. Frein à disque selon une quelconque des revendications précédentes, **caractérisé en ce que** ladite traverse (7) agit sur deux éléments presseurs et/ou broches rotatives disposées l'une en parallèle à l'autre et s'appuyant, via au moins deux desdits éléments presseurs sphériques (9), sur lesdits éléments rotatifs (8).

6. Frein à disque selon une quelconque des revendications précédentes, **caractérisé en ce que** ladite traverse (7) agit sur deux éléments presseurs et/ou broches rotatives disposées l'une en parallèle à l'autre, ladite traverse se trouvant en prise, via un coussinet de pivotement (11), audit levier tournant (8) qui s'appuie, à son tour, via au moins un desdits éléments presseurs sphériques (9) audit étrier de frein (8).

7. Frein à disque selon une quelconque des revendications précédentes, **caractérisé en ce qu'**au moins une parmi lesdites coquilles sphériques (12) renferme un desdits éléments presseurs sphériques (9) essentiellement par fermeture géométrique sans jeu, et **en ce que** lesdits éléments presseurs sphériques supplémentaires (9), qui sont insérés dans lesdites coquilles de coussinet lisse (12) sous forme de segments sphériques, ou lesdites coquilles de coussinet lisse (12) sont configurés d'une telle manière, que lesdits éléments presseurs sphériques (9) soient mobiles, d'un degré restreint, dans lesdites coquilles sphériques (12) sous forme de segments sphériques.

8. Frein à disque selon une quelconque des revendications précédentes, **caractérisé en ce que** lesdites coquilles de coussinet lisse (12) sous forme de segments sphériques présente une forme ovale pour la réception mobile desdits éléments presseurs sphériques (9).

9. Frein à disque selon une quelconque des revendications précédentes, **caractérisé en ce que** lesdits éléments presseurs sphériques insérés dans lesdites coquilles de coussinet lisse (12) sous forme de segments sphériques sont configurés sous forme de billes de palier à roulement (9).

10. Frein à disque selon une quelconque des revendications précédentes, **caractérisé en ce que** les surfaces desdites billes de palier à roulement (9) ont une profondeur de rugosité de moins des deux millièmes d'un millimètre.

11. Frein à disque selon une quelconque des revendications précédentes, **caractérisé en ce qu'**un tourillon ou relief respectif (13) est rattaché ou intégralement formé auxdites coquilles de coussinet lisse (12) sous forme de segments sphériques aux côtés en face desdits creux au moins afin d'empêcher une rotation, ce tourillon ou relief se trouvant en prise dans un trou borgne de forme correspondante de ladite travers (7) ou dudit étrier de frein (6) ou dudit levier tournant (8).

12. Frein à disque selon une quelconque des revendications précédentes, **caractérisé en ce que** ledit tourillon (13) est conçu sous forme d'un tourillon creux à recevoir un lubrifiant, qui est ouvert vers la surface d'appui de ladite coquille sphérique (12).
